# DEMANDE DE BREVET EUROPEEN

(11) **EP 3 158 904 A1**
(43) Date de publication de la demande: **26.04.2017**
(21) Numéro de dépôt: 15190954.6
(22) Date de dépôt: 22.10.2015
(51) Int. Cl.: A47J 43/07, A47J 27/00, A47J 27/10

(54) **ROBOT DE CUISINE AVEC BAIN-MARIE**

(71) Demandeur: BaByliss Faco sprl, 4020 Wandre (BE)
(72) Inventeur: SMAL, Olivier, 4623 MAGNEE (BE); GOERING, Alain, 4000 Liège (BE)
(74) Mandataire: Pronovem

(57) **Abrégé**

La présente invention se rapporte à un robot de cuisine automatique et polyvalent, en particulier un robot pâtissier domestique, comportant une fonction de chauffage et un bain-marie avec deux bols superposés de même contenance et de même géométrie.

## Description

### Objet de l'invention

La présente invention se rapporte à un robot de cuisine automatique et polyvalent, en particulier un robot pâtissier domestique, comportant une fonction de chauffage et un bain-marie avec deux bols superposés de même contenance et de même géométrie.

### Etat de la technique

Les robots de cuisine automatiques comportant des bains-marie sont bien connus de l'homme du métier. Dans l'état de la technique, de nombreux modèles ont été proposés notamment dans US 2707622, US 2275901, US 3063684, US 2006/0044935, WO 91/15143 et plus récemment US 8438971.

Les robots pâtissiers permettent de battre, mélanger, pétrir, chauffer et même parfois de cuire les aliments. Pour travailler les aliments, ils peuvent être équipés d'outils tels que fouets, palettes ou bras pétrisseurs adaptés à la géométrie du bol de l'appareil. Ces outils sont généralement fixés de manière détachable sur une douille rotative suspendue à un bras, la douille rotative pouvant être décentrée par rapport à l'axe de rotation principal de l'appareil, ce qui permet à l'outil de tourner autour d'un axe central et en même temps sur lui-même.

L'outil est entraîné par un moteur à vitesse variable situé dans le socle principal de l'appareil.

Tous ces robots pâtissiers présentent des bains-marie avec des bols ou des cuves superposés de contenance et/ou de géométrie différente, ou simplement avec un bol équipé d'une double paroi. Le volume libre généré par l'espace entre les bols est souvent relativement important et nécessite donc une puissance de chauffe importante pour amener le liquide caloporteur, généralement de l'eau et parfois de l'huile, à la température désirée.

Les robots pâtissiers de l'état de la technique ont tous leurs avantages et inconvénients et tentent généralement de résoudre des problèmes spécifiques.

### Buts de l'invention

La présente invention vise à fournir un robot de cuisine automatique, en particulier un robot pâtissier domestique comportant une fonction de chauffage et un bain-marie avec deux bols superposés de même contenance et de même géométrie. Il présente une série d'avantages par rapport aux robots de l'état de la technique.

### Résumé de l'invention

La présente invention divulgue un robot de cuisine automatique et polyvalent, en particulier un robot pâtissier domestique, comportant une fonction de chauffage et un bain-marie avec deux bols, un bol intérieur et un bol extérieur, de même contenance et de même géométrie.

Les modes d'exécution préférés de l'invention comportent au moins une, ou une combinaison quelconque appropriée des caractéristiques suivantes :
- les bols comportent un moyen d'accrochage mutuel à l'extérieur des surfaces de travail ;
- le moyen d'accrochage est réalisé par les poignées des deux bols qui coopèrent pour pouvoir être accrochées l'une à l'autre ;
- la poignée du bol intérieur se referme sur la poignée du bol extérieur ;
- le volume libre laissé entre les deux bols lorsqu'ils sont emboités l'un dans l'autre est inférieur à 30 % du volume des bols, de préférence inférieur à 20 % ;
- le volume libre laissé entre les deux bols lorsqu'ils sont emboités l'un dans l'autre diminue progressivement jusqu'au bord du bol extérieur ;
- en utilisation, le fluide caloporteur, en particulier l'eau ou l'huile, situé entre le bol intérieur et le bol extérieur représente entre 10 et 30 %, de préférence entre 10 et 20 % du volume des bols ;
- le bol extérieur comporte un élément de fixation coopérant de manière amovible avec la plaque chauffante du robot ;
- en utilisation, lorsque le fluide caloporteur situé entre le bol intérieur et le bol extérieur représente entre 10 et 20 % du volume des bols, le bol intérieur est chauffé sur au moins 30 %, de préférence sur au moins 40 % de sa surface.

### Brève description des figures

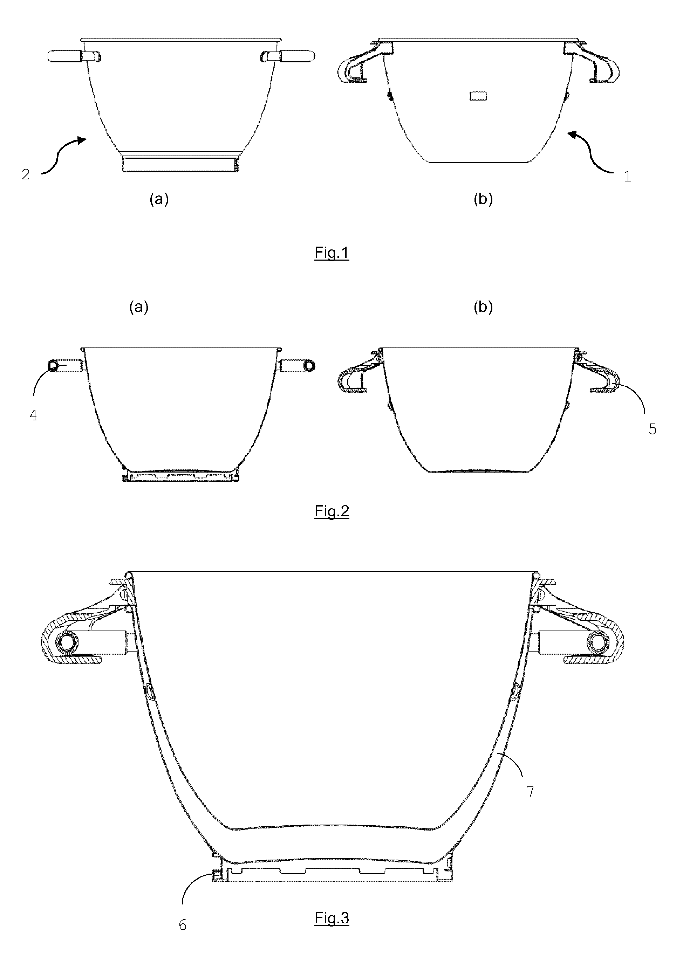

La figure 1 représente une vue en coupe du bol extérieur (a) et du bol intérieur (b). Les deux bols ont la même contenance et la même géométrie.

La figure 2 représente une vue en coupe du bol extérieur (a) et du bol intérieur (b).

La figure 3 représente une vue en coupe du bain-marie avec les bols intérieur et extérieur superposés et la poignée du bol intérieur venant s'amarrer sur la poignée du bol extérieur pour empêcher la rotation d'un bol par rapport à l'autre. On y voit également un élément de centrage fixé sur le bol intérieur permettant à celui-ci de se positionner parfaitement par rapport au bol extérieur.

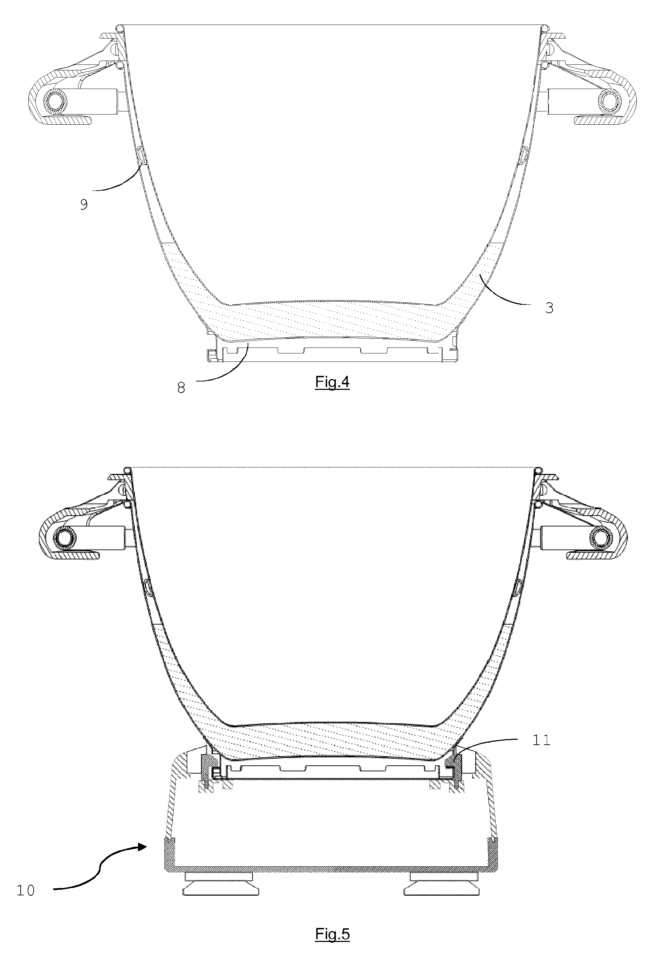

La figure 4 représente une vue en coupe du bain-marie avec les bols intérieur et extérieur superposés identiques à la figure 3 avec un volume de 0,5 litre (500 cm³) de liquide caloporteur (de l'eau par exemple) replissant partiellement l'espace entre le bol intérieur et le bol extérieur. La surface de chauffe est de 316 cm².

La figure 5 représente une vue en coupe du bain-marie avec les bols intérieur et extérieur superposés, l'ensemble étant posé sur le socle chauffant du robot de cuisine. Dans cette figure le volume de liquide caloporteur a été ajusté à 0,6 litre (600cm³) ce qui a pour conséquence d'augmenter la surface de chauffe du bol bain-marie qui passe à 480 cm². Cette surface est 3,7 fois plus élevée que la seule surface de chauffe du fond du bol inférieur.

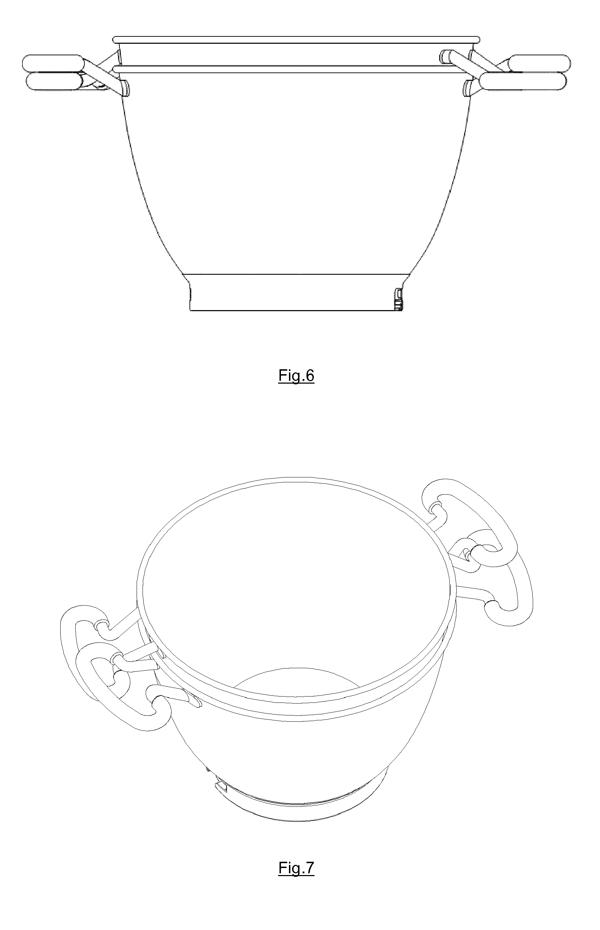

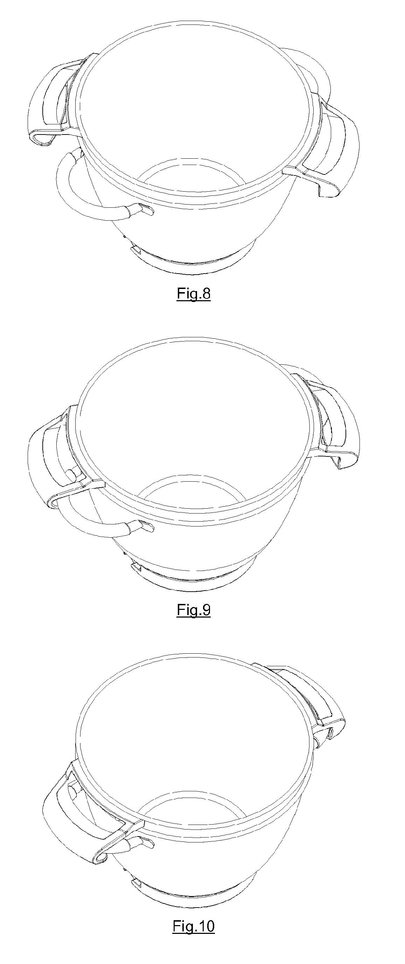

Les figure 6 à 10 représentent des mécanismes d'amarrage du bol intérieur au bol extérieur selon lequel les poignées du bol intérieur et extérieur s'imbriquent l'une dans l'autre (figures 6 et 7) ou la poignée du bol intérieur se glisse progressivement par-dessus la poignée du bol extérieur (Figures 8,9 et 10). Il s'agit ici de deux exemples où la géométrie des deux poignées est réalisée de manière à permettre une coopération aboutissant à une fixation de l'une à l'autre.

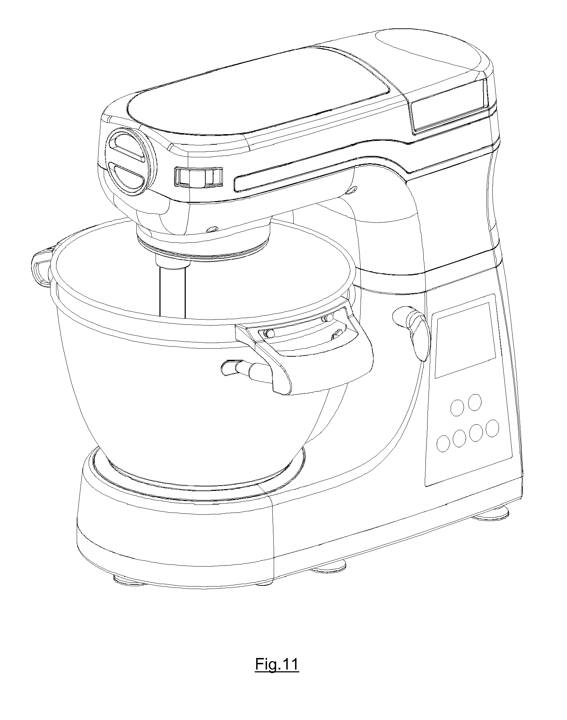

La figure 11 représente une vue d'ensemble en perspective du robot de cuisine selon l'invention.

### Liste des symboles de référence

1. Bol intérieur
2. Bol extérieur
3. Liquide caloporteur
4. Poignée du bol intérieur
5. Poignée du bol extérieur
6. Elément de fixation à la plaque chauffante
7. Volume libre laissé entre les deux bols
8. Plaque chauffante du robot
9. Elément de centrage du bol intérieur dans le bol extérieur
10. Socle du robot de cuisine
11. Mécanisme de fixation du bain-marie sur le socle

### Description détaillée de l'invention

La présente invention présente un robot pâtissier avec une fonction de chauffage et un bain-marie composé d'un bol intérieur 1 et d'un bol extérieur 2.

Le bain-marie permet un travail à température homogène sur la majeure partie de la surface du bol intérieur 1 en contact avec l'aliment. Le bol intérieur et le bol extérieur ont substantiellement la même géométrie et la même contenance, ce qui permet de les fabriquer dans le même moule avec des outillages identiques. Cette rationalisation de la fabrication représente un avantage sensible sur le prix de revient.

Par géométrie des bols, la présente invention entend la géométrie hors éléments extérieurs aux bols comme les poignées, le socle de fixation ou encore l'élément centrage 9 du bol intérieur 1 dans le bol extérieur 2. Il s'agit donc ici de la géométrie et de la contenance des bols tels qu'ils sortent de la presse où ils sont moulés.

Le bain-marie est constitué en superposant simplement les deux bols, le bol extérieur 2 enveloppant le bol intérieur 1 presque jusqu'au point de contact qui constitue un pourtour de quasi fermeture de l'espace libre entre les deux bols et permet d'éviter une évaporation excessive du liquide caloporteur 3 dont la majorité se condensera sur la surface externe supérieure du bol intérieur 1.

Un autre avantage généré par la même géométrie et la même contenance est de pouvoir utiliser les deux bols séparément pour deux préparations différentes utilisées en même temps lorsqu'on ne se sert pas du bain-marie.

Le rétrécissement progressif de l'espace libre engendré par la superposition des deux bols permet de limiterfortement la quantité de liquide caloporteur à chauffer qui, pour un robot pâtissier, est souvent inférieure à 1 litre, voire à un demi-litre. Cette quantité limitée de liquide caloporteur chauffe très vite tout en recouvrant une proportion de surface très grande du bol intérieur. La face externe du bol intérieur est souvent recouverte à plus de 20, 30, 40, voire 50 % de sa surface externe totale ce qui assure une température homogène sur une grande surface de travail dans le bol contenant l'aliment à traiter.

Pour éviter au bol intérieur de tourner dans le bol extérieur lorsque celui-ci est soumis à des outils de malaxage, qui tournent généralement toujours dans le même sens, les poignées des deux bols ont une géométrie adéquate permettant de coopérer pour s'amarrer l'un à l'autre. Pour obtenir cet effet, il y a de nombreuses possibilités dont un échantillon non limitatif est représenté aux figures 6 à 10.

Le bol extérieur comporte un élément de fixation 6 au socle de chauffage pour éviter à l'ensemble de tourner en utilisation.

Le volume de l'espace libre lorsque les deux bols sont superposés est souvent inférieur à 30, voire 25 % du volume des bols, de préférence même inférieur à 20, voire 15 %. Il peut même être réduit à un volume inférieur à 15 ou 10 % du volume des bols en fonction de la géométrie choisie.

La quantité de liquide caloporteur représente une fraction de ce volume libre, souvent plus de 50 ou 60, voire 70 % de celui-ci.

Le liquide caloporteur permet d'augmenter considérablement la surface de chauffe par rapport au chauffage ordinaire situé au fond du bol.

### Exemple

- Les deux bols ont un volume total de 4,7 litres. (4700 cm³)
- La surface de chauffe d'origine est de 128 cm² (plaque chauffante sur le fond du bol extérieur)
- La surface extérieure totale des bols est de 1120 cm².
- Volume de l'espace entre les deux bols 0.77 litre (770 cm³)
Une fois superposés, on introduit dans l'espace entre les deux bols une quantité de liquide caloporteur de 0,5 litre (500cm³), ce qui permet de couvrir 316 cm² et ainsi de multiplier la surface de chauffe d'origine par 2,5.
Pour un volume de liquide caloporteur de 0,6 litre (600cm³) on couvre 480 cm² en multipliant ainsi la surface de chauffe d'origine par 3,75 et on couvre ainsi pratiquement toute la surface de travail du bol intérieur dans la mesure où celui-ci n'est jamais complètement rempli.

## Revendications

1. Robot de cuisine automatique et polyvalent, en particulier un robot pâtissier domestique, comportant une fonction de chauffage et un bain-marie avec deux bols, un bol intérieur (1) et un bol extérieur (2), de même contenance et de même géométrie.

2. Robot de cuisine selon la revendication 1, **caractérisé en ce que** les bols comportent un moyen d'accrochage mutuel à l'extérieur des surfaces de travail.

3. Robot de cuisine selon l'une quelconque des revendications précédentes, **caractérisé en ce que** le moyen d'accrochage est réalisé par les poignées (4,5) des deux bols qui coopèrent pour pouvoir être accrochées l'une à l'autre.

4. Robot de cuisine selon l'une quelconque des revendications précédentes, **caractérisé en ce que** la poignée du bol intérieur (4) se referme sur la poignée du bol extérieur (5).

5. Robot de cuisine selon l'une quelconque des revendications précédentes, **caractérisé en ce que** le volume libre laissé entre les deux bols lorsqu'ils sont emboités l'un dans l'autre est inférieur à 30 % du volume des bols, de préférence inférieur à 20 %.

6. Robot de cuisine selon l'une quelconque des revendications précédentes, **caractérisé en ce que** le volume libre laissé entre les deux bols lorsqu'ils sont emboités l'un dans l'autre diminue progressivement jusqu'au bord du bol extérieur.

7. Robot de cuisine selon l'une quelconque des revendications précédentes, **caractérisé en ce que**, en utilisation, le fluide caloporteur, en particulier l'eau ou l'huile, situé entre le bol intérieur (1) et le bol extérieur (2) représente entre 10 et 30 %, de préférence entre 10 et 20 % du volume des bols.

8. Robot de cuisine selon l'une quelconque des revendications précédentes, **caractérisé en ce que** le bol extérieur comporte un élément de fixation coopérant de manière amovible avec la plaque chauffante du robot.

9. Robot de cuisine selon l'une quelconque des revendications précédentes, **caractérisé en ce que**, en utilisation, lorsque le fluide caloporteur situé entre le bol intérieur et le bol extérieur représente entre 10 et 20 % du volume des bols, le bol intérieur est chauffé sur au moins 30 %, de préférence sur au moins 40 % de sa surface.
